# EUROPEAN PATENT SPECIFICATION

(11) **EP 2 822 226 B1**
(45) Date of publication and mention of the grant of the patent: **27.04.2016**
(21) Application number: 13380027.6
(22) Date of filing: 01.07.2013
(51) Int. Cl.: H04L 12/28, H04L 29/08, G05B 11/01

(54) **System and method for food preparation and processing by cooking and computer program implementing the method**
System und Verfahren zur Lebensmittelzubereitung und -verarbeitung durch kochen und Computerprogramm zur Umsetzung des Verfahrens
Système et procédé pour la préparation et le traitement d'aliments par cuisson et programme informatique de mise en oeuvre du procédé

(43) Date of publication of application: 07.01.2015
(73) Proprietor: Compania Espanola de Electromenaje, SA, 25790 Oliana (Lleida) (ES)
(72) Inventor: Trench Roca, Lluís, 08650 Sallent (Barcelona) (ES); Alet Vidal, Josep, 25790 Oliana (Lleida) (ES); Montraveta Montraveta, Fidel, 25790 Oliana (Lleida) (ES)
(74) Representative: Juncosa Miro, Jaime

(56) References cited:
- WO-A2-2012/123498
- US-A1- 2005 203 647
- US-A1- 2008 178 749
- US-A1- 2010 205 295
- US-A1- 2011 213 667

## Description

### Field of the art

The present invention relates, in general, in a first aspect, to a system for food processing and preparation by cooking including at least one cooking appliance controlled from remote control means, through a bidirectional communications network, and, more particularly, to a system comprising an intermediate server that processes and transmits instructions for the control of the appliance.

A second aspect of the invention relates, in general, to a method for food processing and preparation by cooking comprising remotely controlling a cooking appliance through a bidirectional communications network, and, more particularly, to a method comprising processing and transmitting instructions, asynchronously or synchronously, for the control of the appliance by means of an intermediate server.

A third aspect of the invention relates to a computer programme embodying a part of the method of the second aspect.

### State of the prior art

From patent documents US 5363746 A, US 6565903 B2, EP 1561409 B1 and US2013003490A1 systems and methods are known for food processing and preparation by cooking that include remote control means of such appliances wherein the control, in some cases, is carried out by establishing a communications network (such as a mobile telephony network or the Internet) between the remote control means and a corresponding local unit of the appliance itself.

None of said patent documents teach or suggest the provision, within the established communications networks, of an intermediate server for handling said remote control of the appliance, so that all operations are always carried out through said intermediate server and, as a result, without at any time there being either a direct connection between the cooking appliance and the machine/device, or the possibility of controlling several appliances, or of using some components of the proposed systems by several users or from several remote computing devices.

US 2005/203647 A1 provides a method for communicating with and controlling an intelligent appliance by a user from a remote device. Moreover, the intelligent appliance may proactively establish outbound internet connections to one or more servers acting as an authentication mechanism and a conduit that will allow the user to easily communicate with the intelligent appliance via the internet over the server connection.

Patent application US 2010/205295 A1 provides a system for synchronous monitoring of a cooking process of a plurality of cooking devices via the internal web browser of one of the cooking devices comprising a plurality of cooking devices that can be interconnected via interfaces. Each cooking device is connected to at least one internal web server that is connected to a network and that provides services for the monitoring, control or analysis of at least one of the cooking devices. At least one internal web browser is provided that is connected to the network and that can use at least the services of one of the internal web servers.

Other similar system and methods are provided in patent application US 2008/178749 A1, patent application US 2011/213667 A1 and/or in International patent application WO 2012/123498 A2.

### Disclosure of the invention

It appears necessary to offering an alternative to the state of the art that will overcome the shortcomings found therein and that, as a result, will permit attaining a safer and more elaborate control of one o several cooking appliances in a remote manner.

With such an end, the present invention relates, in a first aspect, to a system for food processing and preparation by cooking that comprises, in a way known per se:
- a cooking appliance for food processing and preparation by cooking integrating local control means including at least one microprocessor for the control of the power supply and the operation of actuation means and thermal energy transfer means of said appliance, based on control instructions containing at least some cooking parameters and communications means in connection with said microprocessor, and
- remote control means including an independent user computing device (such as a smartphone, a PDA, a tablet computer or a personal computer, among others) separate from said appliance constituting an external user interface for at least the entry of said control instructions and comprising communications means through which the user computing device is in communication with the wireless communications means of said local control means through a communications network, at least for forwarding said control instructions to the microprocessor, said communications network being full duplex and comprising an intermediate server that processes and transmits at least said control instructions, generally by means of communications protocols, whether synchronously or asynchronously, from remote control means, to the microprocessor of the local control means, or vice versa.

Unlike the state-of-the-art systems, in the one proposed by the first aspect of the present invention said food processing and preparation cooking appliance (A1) is a first appliance, and the system further includes a plurality of food processing and preparation cooking appliances (A1, A2), including said first appliance (A1), each of them with local control means identical or similar to those of the first appliance (A1). Furthermore, the system integrates a database (B), comprised and/or accessible by said intermediate server (S), comprising data relative to said plurality of cooking appliances (A1, A2), indicating their current state and their operational history, and to a plurality of users, including at least respective identification information thereof and the association between users and groups of cooking appliances (A1, A2).

Preferably, at least part of the communications network is wireless (in general, by radio access). The latter can be wireless either fully or only in part, including hardwired portions, for instance of optical fibre.

For one preferred embodiment, the intermediate server is a cloud-like computing infrastructure, or part thereof, and it is formed by one single computing entity or by a plurality of computing entities cooperating with one another.

The communications network is preferably a wide area network, although for other embodiments, the network is of a different type, such as a medium area network, or a combination of different types of network.

According to one embodiment, said user computing device is a first device, and the system comprises a plurality of user computing devices, including the first device, with respective communications means in communication with said communications network, each of them being controllable by at least one user and implementing a respective external user interface for the entry of control instructions for controlling one or more food processing and preparation cooking appliances.

According to one preferred embodiment, the intermediate server makes the forwarding of said control instructions to the microprocessor of the required appliance conditional on the result of at least cross-checking user's identification information of the user computing device and of the appliance he or she wishes to control. This way, an important aspect of this invention's proposal appears, offering security conditions for the remote operation of a cooking appliance by interposing a verification control unit of the characteristics and conditions of the system users.

Optionally, the intermediate server also makes the forwarding of said control instructions to the microprocessor of the required appliance conditional on the result of a verification of the operational state of the appliance and/or of a verification of the existence of some type of error occurred in the appliance.

Advantageously, the appliances of said plurality of food processing and preparation cooking appliances are grouped together forming different groups, each group being associated with one or more users for its control by means of the corresponding forwarding of control instructions to the microprocessors of its local control means, which control the devices of their respective groups by means of one or more computing devices that will allow their communication with an intermediate server whereat the user will identify himself or herself, as well as the appliance he or she wishes to control, the intermediate server authorising him or her, or failing to do so, based on the result of cross-checking identifications, which allows to know if the user in question is associated with the appliance he or she wishes to control.

The server acquires the information recorded in said database for carrying out the validations described above, and also for incorporating new information resulting from the system operation and/or new records of users and appliances, so as to update the database.

Each of the users utilising the system has access, according to one embodiment, by means of one or more user computing devices, and conditional on the authentication carried out by the intermediate server, to at least part of the information recorded in said database and/or received by the intermediate server from the microprocessor of a cooking appliance associated with the user in question, including a signal confirming the reception of a control instruction that will let the user know that the control instructions he or she has sent to the intermediate server so as to control an appliance have been received by the intermediate server and/or by the required appliance.

The cooking parameters may advantageously include the different steps of a recipe, it being possible to create or generate a library comprising different recipes. In addition, these recipes may also be updated and/or shared among different users through different social networks or through a blog.

According to one embodiment, the control instructions include identification information of the appliance that is to be controlled and/or of the user that is utilising the user computing device from which he or she wishes to control the appliance. For one further alternative embodiment, such identification information is not included in the control instructions; rather, it is forwarded to the intermediate server, or acquired by it, by other means.

In general, the user accesses the service provided by the intermediate server, that is, the control of one or more cooking appliances, upon logging into it, for instance through a specific application ('App') installed in his or her device or through a web page, said record including the identification of the cooking appliances belonging to him or her or whose control is granted to him or her.

Once logged in, the user can automatically control the appliance or appliances associated with him or her, directly sending one or more control instructions to the intermediate server, for instance through said application or another specific application or through said web page or another web page, whether it be after automatically carrying out the identification/authentication -for instance, by running said application- or after a manual identification/authentication, by entering a username and password required by the intermediate server in a home page of said application or said web page.

Additionally or alternatively to said user identification/authentication by the intermediate server, according to one embodiment, the identification/authentication of the user computing devices from which the service is requested is carried out.

A second aspect of the invention concerns a method for food processing and preparation by cooking comprising, in a way known per se, the control of a cooking appliance for food processing and preparation by cooking, based on control instructions containing at least some cooking parameters, forwarded to local control means of the appliance, through a communications network, from remote control means including an independent user computing device separate from the appliance; and the processing and transmitting, through an intermediate server of the communications network, said control instructions, which may be encrypted by means of cryptographic protocols so as to provide a safer transmission through said communications network from the remote control means to the local control means, or vice versa.

Unlike the known state-of-the-art methods, the method proposed by the second aspect of the present invention comprises controlling a plurality of cooking appliances by one or more users, from one or more user computing devices through the supervision and control of the asynchronous or synchronous forwarding of control instructions, from the respective remote control means, to the local control means of the required appliance by means of the intermediate server of the communications network.

Preferably, the method comprises carrying out, by the intermediate server, the forwarding of control instructions to the local control means of the required appliance conditional on the result of at least cross-checking user's identification information of the user of the user computing device and of the appliance he or she wishes to control, carried out by the intermediate server.

Optionally, the method of the second aspect of the invention further comprises making the forwarding of the control instructions to the microprocessor of the required appliance conditional on the result of a verification of the operational state of the appliance and/or of a verification of the existence of some type of error occurred in the appliance, carried out by the intermediate server.

For one embodiment, the method comprises the forwarding, by the intermediate server, of a signal confirming the reception of a control instruction to the user computing device from which a user has requested the control of a cooking appliance, by the intermediate server and/or the appliance to be controlled.

The intermediate server preferably acquires, either actively or passively, said identification (such as serial numbers) and state information of the appliance or appliances through the communications means of the local control means and at least user identification information (such as a nickname or a username) through the communications means of the user computing device or devices.

The method proposed by the second aspect of the invention is adapted to be carried out using the system proposed by the first aspect of the invention, and vice versa (i.e., the system is adapted to implement the method). Let the embodiments described above in connection with the operation of the system proposed by the first aspect of the invention serve as descriptive embodiments of the possible actions or steps to be carried out through the method proposed by the second aspect of the invention, including said authentications, records in the service provided by the intermediate server, etc.

It has further been envisaged that said intermediate server may also further transmit multimedia information, e.g. of an advertising or formative type, which will be shown on said user computing device in said user interface or screen thereof, based on the data acquired of the operation throughout time by the appliance user.

A third aspect of the present invention concerns a computer programme including coded instructions that, when run in a computer, implement the method of the second aspect for conditionally forwarding the control instructions to the local control means of the appliance required, as explained above.

The computer programme comprises respective software applications: a first software application, executable by the user computing device, such as the aforementioned specific application ('App'), to carry out at least the operations described above associated with the user computing device, showing (once executed) graphical information on the user computing device screen in the form, for instance, of different menus or options for controlling the appliances associated with one or more users in order to build said external user interface, and a second software application executable by the intermediate server to carry out at least the actions described above relative thereto (validations, authentication, forwarding of control instructions to the device, acknowledgements to the user computing device, etc.).

According to one embodiment, the first software application lets the user carry out the selection of the cooking appliance to be controlled, as well as the desired control instructions and/or control parameters (start/end time, cooking duration, temperature, speed of the actuation means, etc.), whether individually, directly, or as a group, indirectly and in an advantageously transparent manner, for instance by selecting a recipe to be implemented by the cooking appliance that has a series of values associated for the control parameters that are sent to the intermediate server, without their necessarily being shown in detail to the user.

### Brief description of the drawings

The above and other advantages and characteristics will be more fully understood from the following detailed description of embodiments with reference to the attached drawings, which must be taken by way of illustration, not limitation, wherein:
Fig: 1 diagrammatically shows one embodiment of the system proposed by the first aspect of the invention, for which the latter comprises a cooking appliance, a user computing device and an intermediate server, formed and integrated in a cloud-like computing infrastructure of a communications network to which both the cooking appliance and the user computing device are connected;
Fig. 2 shows one further embodiment of the system proposed by the first aspect of the invention that differs from the one in Fig. 1 in that it includes two cooking appliances to be controlled from one user's computing device, which is illustrated, and wherein the cloud-like intermediate server includes a database; and
Fig. 3 shows one additional further embodiment of the system proposed by the first aspect of the invention that differs from the one in Fig. 2 in that it includes several user computing devices from which the illustrated cooking appliances are controlled.

### Detailed description of some embodiments

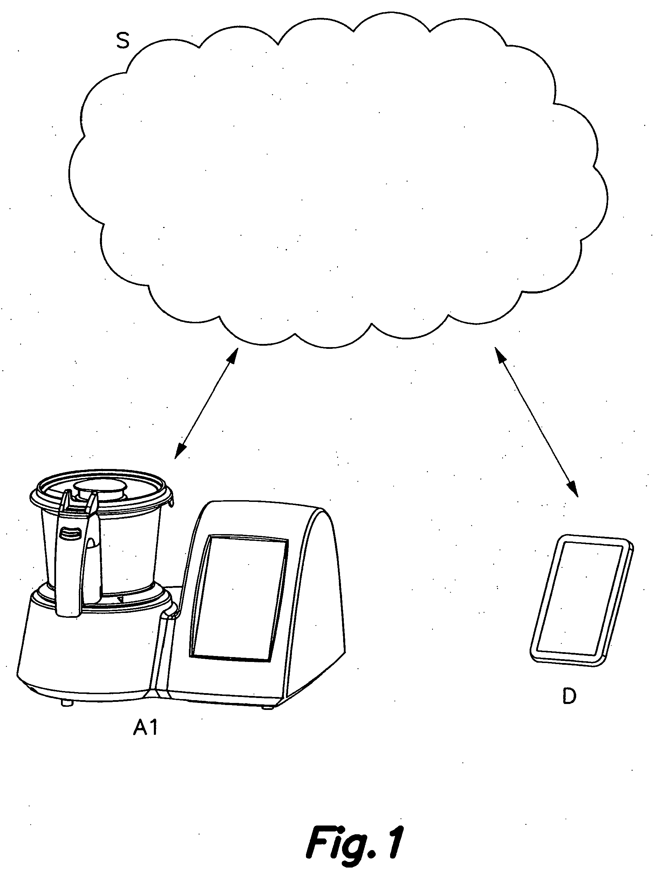

As illustrated in Figures 1, 2 and 3, the system for food processing and preparation by cooking proposed by the first aspect of the invention comprises:
- one or more cooking appliances A1, A2 for food processing and preparation by cooking comprising local control means (internal to the illustrated appliance or appliances) including at least one microprocessor for the control of the power supply and the operation of actuation means and thermal energy transfer means of each of said appliances A1, A2 based on control instructions containing at least some cooking parameters and communications means, which, in these particular embodiments, are wireless, in connection with said microprocessor, and
- remote control means including one or more independent user computing devices D1, D2, D3 separate from the appliance or appliances A1, A2 constituting an external user interface for at least the entry of control instructions and comprising wireless communications means (internal to the illustrated device) through which the user computing device D1, D2, D3 is in communication with the wireless communications means of said local control means through a communications network at least, among others, for forwarding the control instructions to the microprocessor.

According to the proposal of the present invention, said communications network comprises an intermediate server S that supervises and controls the asynchronous or synchronous forwarding of control instructions, in an asynchronous or synchronous way, depending on the communications protocol used, from the remote control means to the microprocessor of the local control means.

In addition, according to one preferred embodiment, said intermediate server S is conceived, among other functions, to make the forwarding of said control instructions to the microprocessor of the required appliance A1, A2 conditional on the result of at least cross-checking at least user's identification information of the user of of the user computing device D1, D2, D3 and of the appliance A1, A2 he or she wishes to control. Alternatively, the intermediate server S may even make said forwarding conditional on the result of a verification of the operational state of the appliance and/or of a verification of the existence of some type of error occurred in the appliance.

This way, said intermediate server S intervenes in all communications between user computing devices and the appliance or appliances A1, A2, processing and transmitting all the instructions and contributing a security component in any operations.

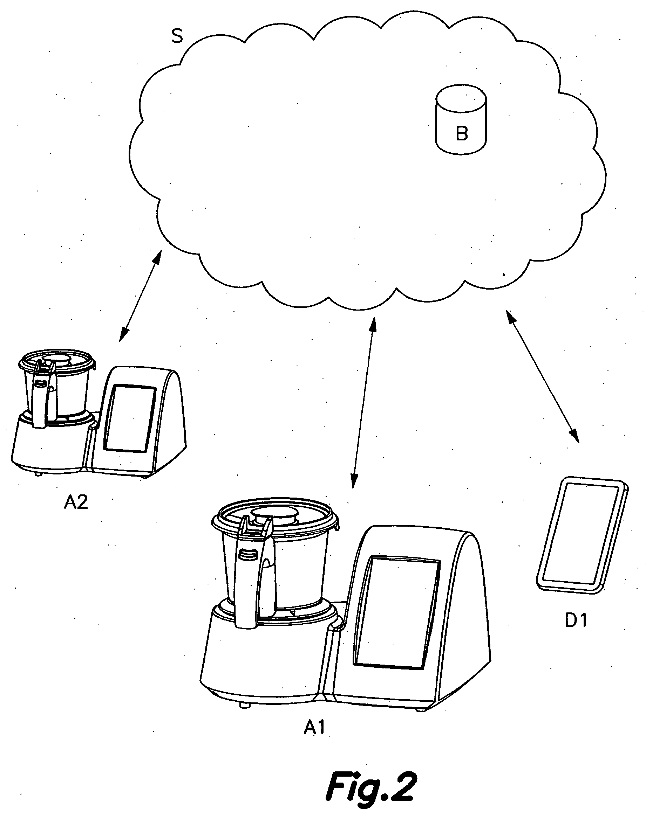

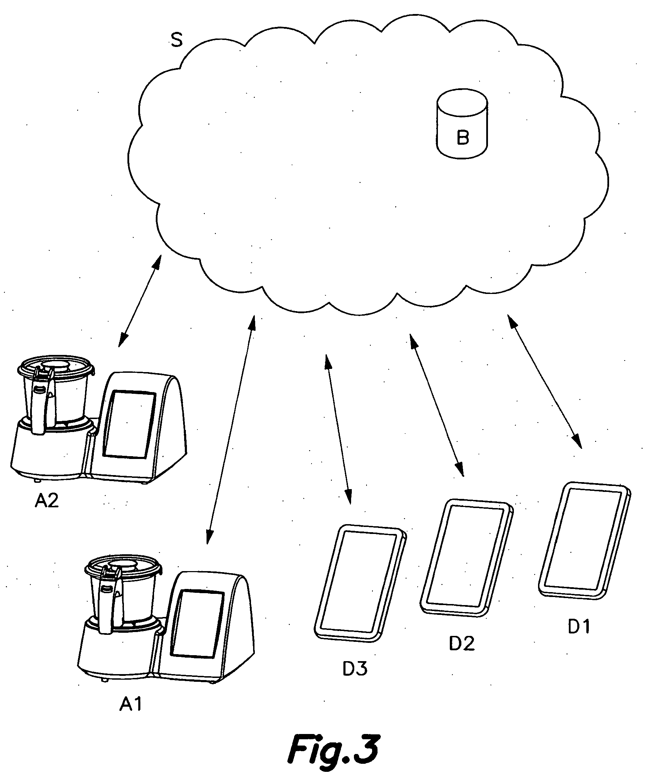

Figures 2 and 3 show embodiments wherein the system includes a database B that may comprise and/or be accessible by said intermediate server S. Generally, this database will include data relative to said appliances A1, A2 and data relative to the different users. Said data that will be included in said database B may include information relative to user registrations, cancellations or data maintenance; information relative to registrations, cancellations or data maintenance for the appliance(s) registered for one user; a control time for the users' logins/logouts; information relative to the time of operation of each of the registered appliances; information regarding recipes published by one user and other users; private information of each user (for instance, for preparing and archiving one's own recipes, storing photos, notes, etc.); information relative to a user's connectivity with different social networks; a record of the recipes resorted to by a user, etc.

In addition, advantageously and according to an improvement of the present invention, the database B may also include a mechanism that will allow offering each user, through the respective user's computing device, a recipe schedule within a time frame -for instance for one entire week-, depending on the user's preferences (for instance, among others, low-calorie, vegetarian or regional recipes). It may even include a mechanism offering each user recipes with food ingredients that said user has in stock, thereby preventing the wastage of foodstuffs by the user.

In these embodiments, each of said users, by means of their respective computing devices D1, D2, D3, may access, generally conditional on the authentication carried out by the intermediate server S, to at least part of the information recorded in said database B and/or received by the intermediate server S from the microprocessor of a cooking appliance A1, A2 associated with said user, including a signal confirming the reception of a control instruction.

The scope of the present invention is defined in the following attached claims.

## Claims

1. A system for food processing and preparation by cooking comprising:
- a cooking appliance (A1) for food processing and preparation by cooking comprising local control means including at least one microprocessor for the control of the power supply and the operation of actuation means and thermal energy transfer means of said appliance (A1), based on control instructions containing at least some cooking parameters and communications means in connection with said microprocessor, and
- remote control means including an independent user computing device (D1) separate from said appliance (A1) constituting an external user interface for at least the entry of said control instructions and comprising communications means of the user computing device (D1) for communicating with said local control means through a communications network at least for forwarding said control instructions to the microprocessor, wherein said communications network is bidirectional and comprises an intermediate server (S) with the capacity to process and transmit at least said control instructions from said remote control means to said microprocessor of the local control means, or vice versa,
the system being **characterised in that** said food processing and preparation cooking appliance (A1) is a first appliance, and **in that** the system comprises:
- a plurality of food processing and preparation cooking appliances (A1, A2), including said first appliance (A1), each of them with local control means identical or similar to those of the first appliance (A1); and
- a database (B) comprised and/or accessible by said intermediate server (S), comprising data relative to said plurality of cooking appliances (A1, A2), indicating their current state and their operational history, and to a plurality of users, including at least respective identification information thereof and the association between users and groups of cooking appliances (A1, A2).

2. A system according to claim 1 **characterised in that** said communications means in connection with said microprocessor and said communications means of the user computing device (D1) are of wireless technology.

3. A system according to claim 1 **characterised in that** the transmission of said control instructions is carried out asynchronously or synchronously by means of communications protocols.

4. A system according to any one of the preceding claims **characterised in that** said user computing device (D1) is a first device, and **in that** the system comprises a plurality of user computing devices (D1, D2, D3), including said first device (D1), with respective communications means in communication with said communications network, each of them being controllable by at least one user and implementing a respective external user interface for the entry of control instructions for controlling one or more food processing and preparation cooking appliances (A1, A2).

5. A system according to any one of the preceding claims **characterised in that** said intermediate server (S) is adapted to make the forwarding of said control instructions to the microprocessor of the required appliance (A1, A2) conditional on:
- the result of at least cross-checking at least user's identification information of the user of the user computing device (D1, D2, D3) and of the appliance (A1, A2) he or she wishes to control, or
- the result of a verification of the operational state of the appliance and/or of a verification of the existence of some type of error occurred in the appliance.

6. A system according to claim 5 **characterised in that** said appliances (A1, A2) of said plurality of food processing and preparation cooking appliances are grouped together, each group being associated with one or more users for its control by means of the corresponding forwarding of control instructions to the microprocessors of its local control means.

7. A system according to claim 1 **characterised in that** each of the.users of a plurality of users has access, through at least one of said user computing devices (D1, D2, D3), conditional on the authentication carried out by the intermediate server (S), to at least part of the information recorded in said database (B) and/or received by the intermediate server (S) from the microprocessor of a cooking appliance (A1, A2) associated with said user, including a signal confirming the reception of a control instruction.

8. A system according to claim 4 **characterised in that** said control instructions include identification information of the appliance (A1, A2) that is to be controlled and/or of the user that is utilising the user computing device (D1, D2, D3).

9. A method for food processing and preparation by cooking comprising:
- the control of a cooking appliance (A1) for food processing and preparation by cooking, based on control instructions containing at least some cooking parameters, forwarded to local control means of the appliance (A1), through a communications network, from remote control means including an independent user computing device (D1) separate from said appliance; and
- the processing and transmission of said control instructions, through an intermediate server (S), from said remote control means to said microprocessor of the local control means, or vice versa,
the method being **characterised by** comprising the control of a plurality of cooking appliances (A1, A2) by one or more users, from one or more user computing devices (D1, D2, D3) through the supervision and control of the asynchronous or synchronous forwarding of control instructions, from the respective remote control means, to the local control means of the required appliance (A1, A2), by means of said intermediate server (S) of the communications network, and by the use of a database (B) comprised and/or accessible by said intermediate server (S), comprising data relative to said plurality of cooking appliances (A1, A2), indicating their current state and their operational history, and to a plurality of users, including at least respective identification information thereof and the association between users and groups of cooking appliances (A1, A2).

10. A method according to claims 9 **characterised by** comprising carrying out, by the intermediate server (S), said forwarding of control instructions to the local control means of the required appliance (A1, A2) conditional on the result of at least cross-checking at least user's identification information of the user of the user computing device (D1) and of the appliance he or she wishes to control, carried out by the intermediate server (S).

11. A method according to any one of claims 9 to 10 **characterised in that** said intermediate server (S) acquires, either actively or passively, at least identification and state information of said appliance or appliances (A1, A2) through the communications means of the local control means and at least user identification information through the communications means of the user computing device or devices (D1, D2, D3).

12. A method according to claim 9 **characterised in that** said intermediate server (S) further transmits multimedia information that will be shown in said user computing device D1, on said user interface thereof, based on operational data acquired by the user of the appliance (A1).

13. A method according to claim 9 **characterised by** comprising the forwarding, by the intermediate server (S), of a signal confirming the reception of a control instruction to the user computing device (D1, D2, D3) from which a user has requested the control of a cooking appliance (A1, A2).

14. A method according to claim 9 **characterised by** comprising the transmission of said control instructions in an encrypted way.

15. A computer programme including coded instructions that, when run in a computer, implement the method according to claim 10.

## Patentansprüche

1. System zur Lebensmittelverarbeitung und -zubereitung durch Kochen, umfassend:
- ein Kochgerät (A1) zur Lebensmittelverarbeitung und -zubereitung durch Kochen, umfassend lokale Steuermittel einschließlich zumindest eines Mikroprozessors für die Steuerung der Stromversorgung und des Betriebs von Betätigungsmitteln und Wärmeenergieübertragungsmitteln des genannten Geräts (A1), basierend auf Steuerbefehle enthaltend zumindest einige Kochparameter und Kommunikationsmittel in Verbindung mit dem genannten Mikroprozessor, und
- Fernsteuermittel einschließlich einer unabhängigen Benutzerrechenvorrichtung (D1), die von dem genannten Gerät (A1) getrennt ist, und eine äußere Benutzerschnittstelle für zumindest die Eingabe der genannten Steuerbefehle bildet und umfassend Kommunikationsmittel der Benutzerrechenvorrichtung (D1) für die Kommunikation mit den genannten lokalen Steuermitteln über ein Kommunikationsnetz zumindest für die Übermittlung der genannten Steuerbefehle an den Mikroprozessor, wobei das genannte Kommunikationsnetz bidirektional ist und einen Zwischenserver (S) mit Kapazität für die Verarbeitung und Weiterleitung von zumindest den genannten Steuerbefehlen von den genannten Fernsteuermitteln zum genannten Mikroprozessor der lokalen Steuermittel oder umgekehrt, umfasst,
wobei das System **dadurch gekennzeichnet ist, dass** das genannte Kochgerät (A1) zur Lebensmittelverarbeitung und -zubereitung ein erstes Gerät ist, und dass das System Folgendes umfasst:
- eine Vielzahl von Kochgeräten (A1, A2) zur Lebensmittelverarbeitung und
- zubereitung, einschließlich des genannten ersten Geräts, wobei Jedes lokale Steuermittel enthält, die mit den Steuermitteln des ersten Geräts (A1) identisch oder ähnlich sind; und
- eine Datenbank (B) gebildet aus und/oder zugänglich durch den genannten Zwischenserver (S), umfassend Daten in Bezug auf die genannte Vielzahl von Kochgeräten (A1, A2), welche ihren aktuellen Zustand und ihren Betriebsverlauf anzeigen, und auf eine Vielzahl von Benutzern, enthaltend zumindest jeweilige Identifikationsinformation derselben und die Verbindung zwischen Benutzern und Gruppen von Kochgeräten (A1, A2).

2. System nach Anspruch 1, **dadurch gekennzeichnet, dass** die genannten Kommunikationsmittel in Verbindung mit dem genannten Mikroprozessor und den genannten Kommunikationsmitteln der Benutzerrechenvorrichtung (D1) der Drahtlostechnologie gehören.

3. System nach Anspruch 1, **dadurch gekennzeichnet, dass** die Weiterleitung der genannten Steuerbefehle asynchron oder synchron über Kommunikationsprotokolle durchgeführt wird.

4. System nach einem der vorhergehenden Ansprüche, **dadurch gekennzeichnet, dass** die genannte Benutzerrechenvorrichtung (D1) eine erste Vorrichtung ist, und dass das System eine Vielzahl von Benutzerrechenvorrichtungen (D1, D2, D3) umfasst, einschließlich der genannten ersten Vorrichtung (D1), mit jeweiligen Kommunikationsmitteln in Verbindung mit dem genannten Kommunikationsnetz, wobei Jede von zumindest einem Benutzer gesteuert werden kann und eine jeweilige äußere Benutzerschnittstelle für die Eingabe von Steuerbefehlen für die Steuerung von einem oder mehreren Kochgeräten (A1, A2) zur Lebensmittelverarbeitung und -zubereitung verwirklicht.

5. System nach einem der vorhergehenden Ansprüche, **dadurch gekennzeichnet, dass** der genannte Zwischenserver (S) dazu angepasst ist, die Übermittlung der genannten Steuerbefehle an den Mikroprozessor des benötigten Geräts (A1, A2) durch Folgendes bedingt zu machen:
- das Ergebnis von zumindest einer Gegenkontrolle von zumindest Benutzeridentifikationsinformation von dem Benutzer der Benutzerrechenvorrichtung (D1, D2, D3) und von dem Gerät (A1, A2), das er steuern möchte, oder
- das Ergebnis einer Verifizierung des Betriebszustands des Geräts und/oder einer Verifizierung der Existenz einer Art von Fehler, die in dem Gerät aufgetaucht ist.

6. System nach Anspruch 5, **dadurch gekennzeichnet, dass** die genannten Geräte (A1, A2) der genannten Vielzahl von Kochgeräten zur Lebensmittelverarbeitung und -zubereitung in Gruppen angeordnet sind, wobei jede Gruppe mit einem oder mehreren Benutzern für ihre Steuerung über die entsprechende Übermittlung von Steuerbefehlen an die Mikroprozessoren ihrer lokalen Steuermittel verbunden ist.

7. System nach Anspruch 1, **dadurch gekennzeichnet, dass** jeder der Benutzer einer Vielzahl von Benutzern, durch zumindest eine der genannten Benutzerrechenvorrichtungen (D1, D2, D3), bedingt durch die Authentifizierung, die durch den Zwischenserver (S) durchgeführt wird, auf zumindest Teil der Information, welche in der genannten Datenbank (B) erfasst und/oder von dem Zwischenserver (S) von dem Mikroprozessor eines Kochgeräts (A1, A2), welches mit dem genannten Benutzer verbunden ist, empfangen wird, Zugang hat, enthaltend ein Signal, welches den Empfang eines Steuerbefehls bestätigt.

8. System nach Anspruch 4, **dadurch gekennzeichnet, dass** die genannten Steuerbefehle Identifikationsinformation des Geräts (A1, A2) enthalten, welches gesteuert werden muss und/oder des Benutzers, welcher die Benutzerrechenvorrichtung (D1, D2, D3) benutzt.

9. Verfahren zur Lebensmittelverarbeitung und -zubereitung durch Kochen umfassend:
- die Steuerung eines Kochgeräts (A1) zur Lebensmittelverarbeitung und - zubereitung durch Kochen, basierend auf Steuerbefehle enthaltend zumindest einige Kochparameter, welche an lokalen Steuermittel des Geräts (A1), über ein Kommunikationsnetz, von Fernsteuermitteln einschließlich einer unabhängigen Benutzerrechenvorrichtung (D1), die von dem genannten Gerät getrennt ist, übermittelt werden; und
- die Verarbeitung und Weiterleitung der genannten Steuerbefehle, durch einen Zwischenserver (S), von den genannten Fernsteuermitteln an den genannten Mikroprozessor der lokalen Steuermittel, oder umgekehrt,
wobei das Verfahren **dadurch gekennzeichnet ist, dass** es die Steuerung einer Vielzahl von Kochgeräten (A1, A2) durch einen oder mehreren Benutzer, von einer oder mehreren Benutzerrechenvorrichtungen (D1, D2, D3) umfasst, durch die Überwachung und Steuerung der asynchronen oder synchronen Übermittlung von Steuerbefehlen, von den jeweiligen Fernsteuermitteln, an die lokalen Steuermittel des benötigten Geräts (A1, A2), durch den genannten Zwischenserver (S) des Kommunikationsnetzes und durch die Verwendung einer Datenbank (B), gebildet aus und/oder zugänglich durch den genannten Zwischenserver (S), umfassend Daten in Bezug auf die genannte Vielzahl von Kochgeräten (A1, A2), welche ihren aktuellen Zustand und ihren Betriebsverlauf anzeigen, und auf eine Vielzahl von Benutzern, enthaltend zumindest jeweilige Identifikationsinformation derselben und die Verbindung zwischen Benutzern und Gruppen von Kochgeräten (A1, A2).

10. Verfahren nach Anspruch 9, **dadurch gekennzeichnet, dass** es die Durchführung, durch den Zwischenserver (S), der genannten Übermittlung von Steuerbefehlen an die lokalen Steuermittel des benötigten Geräts (A1, A2) bedingt durch das Ergebnis von zumindest einer Gegenkontrolle von zumindest Benutzeridentifikationsinformation von dem Benutzer der Benutzerrechenvorrichtung (D1) und von dem Gerät, das er steuern möchte, durchgeführt durch den Zwischenserver (S), umfasst.

11. Verfahren nach einem der Ansprüche 9 bis 10, **dadurch gekennzeichnet, dass** der genannte Zwischenserver (S), entweder aktiv oder passiv, zumindest Identifikations- und Zustandsinformation des genannten Geräts oder der genannten Geräte (A1, A2) durch die Kommunikationsmittel der lokalen Steuermittel und zumindest Benutzeridentifikationsinformation durch die Kommunikationsmittel der Benutzerrechenvorrichtung oder Benutzerrechenvorrichtungen (D1, D2, D3) erhält.

12. Verfahren nach Anspruch 9, **dadurch gekennzeichnet, dass** der genannte Zwischenserver (S) zusätzlich Multimediainformation weiterleitet, welche in der genannten Benutzerrechenvorrichtung D1, auf der genannten Benutzerschnittstelle derselben, basierend auf von dem Benutzer des Geräts (A1) erhaltene Betriebsdaten gezeigt werden.

13. Verfahren nach Anspruch 9, **dadurch gekennzeichnet, dass** es die Übermittlung, durch den Zwischenserver (S), eines Signals, welches den Empfang eines Steuerbefehls an die Benutzerrechenvorrichtung (D1, D2, D3), von welcher ein Benutzer die Steuerung eines Kochgeräts (A1, A2) beantragt hat, umfasst.

14. Verfahren nach Anspruch 9, **dadurch gekennzeichnet, dass** es die Weiterleitung der genannten Steuerbefehle verschlüsselt umfasst.

15. Computerprogramm enthaltend codierte Befehle welche, wenn es auf einem Computer abläuft, das Verfahren nach Anspruch 10 verwirklichen.

## Revendications

1. Système pour traiter des aliments et les préparer par la cuisson comportant:
- un appareil de cuisson (A1) pour traiter et préparer des aliments par la cuisson comportant des moyens de contrôle local comprenant au moins un microprocesseur pour le contrôle de l'alimentation électrique et le fonctionnement de moyens d'actionnement et des moyens de transfert d'énergie thermique de cet appareil (A1), basé sur des instructions de contrôle contenant au moins certains paramètres de cuisson et des moyens de communication reliés à ce microprocesseur et
- des moyens de contrôle télécommandé comprenant un dispositif informatique utilisateur indépendant (D1) séparé de cet appareil (A1) constituant un interface utilisateur externe pour au moins l'entrée de ces instructions de contrôle et comportant des moyens de communication du dispositif informatique utilisateur (D1) pour communiquer avec ces moyens de contrôle local à travers un réseau de communications au moins pour acheminer ces instructions de contrôle au microprocesseur, dans lequel ce réseau de communications est bidirectionnel et comporte un serveur intermédiaire (S) ayant la capacité de traiter et de transmettre au moins ces instructions de contrôle de ces moyens de contrôle télécommandé à ce microprocesseur des moyens de contrôle local ou vice versa.
le système étant **caractérisé en ce que** cet appareil de traitement et préparation des aliments par la cuisson (A1) est un premier appareil, et **en ce que** le système comporte:
- une pluralité d'appareils pour traiter des aliments et les préparer par la cuisson (A1, A2), dont ce premier appareil (A1), chacun ayant des moyens de contrôle local identiques ou similaires à ceux du premier appareil (A1); et
- une base de données (B) comprise et/ou étant accessible par ces serveurs intermédiaires (S) comportant des données concernant cette pluralité d'appareils de cuisson (A1, A2), indiquant leur état actuel et leur histoire opérationnelle et à une pluralité d'utilisateurs, comportant au moins leurs informations d'identification respectives et la liaison entre les utilisateurs et les groupes d'appareils de cuisson (A1, A2).

2. Un système conformément à la revendication 1 **caractérisé en ce que** ces moyens de communication reliés à ce microprocesseur et ces moyens de communication de l'appareil informatique utilisateur (D1) sont de technologie sans fil.

3. Un système conformément à la revendication 1 **caractérisé en ce que** la transmission de ces instructions de contrôle se fait de façon asynchrone ou synchrone au moyen de protocoles de communications.

4. Un système conformément à une quelconque des revendications précédentes **caractérisé en ce que** ce dispositif informatique utilisateur (D1) est un premier dispositif et **en ce que** le système comporte une pluralité de dispositifs informatiques utilisateur ((D1, D2, D3), dont ce premier dispositif (D1), avec les moyens de communication respectifs en communication avec ce réseau de communications, chacun d'eux pouvant être contrôlé par au moins un utilisateur et mettant en oeuvre un interface utilisateur externe respectif pour l'entrée d'instructions de contrôle pour contrôler un ou plusieurs appareils pour traiter et préparer des aliments par la cuisson (A1, A2).

5. Un système conformément à une quelconque des revendications précédentes **caractérisé en ce que** ce serveur intermédiaire (S) est adapté pour acheminer ces instructions de contrôle au microprocesseur de l'appareil concerné (A1, A2), à condition que:
- le résultat d'au moins un recoupement des informations d'identification de l'utilisateur du dispositif informatique utilisateur (D1, D2, D3) et de l'appareil (A1, A2) qu'il ou qu'elle souhaite contrôler, ou
- le résultat d'une vérification de l'état opérationnel de l'appareil et/ou d'une vérification de l'existence d'un certain type d'erreur qui a eu lieu dans l'appareil.

6. Un système conformément à la revendication 5, **caractérisé en ce que** ces appareils (A1, A2) de cette pluralité d'appareils pour traiter des aliments et les préparer par la cuisson sont groupés ensemble, chaque groupe étant relié à un ou plusieurs utilisateurs pour son contrôle au moyen de l'acheminement correspondant d'instructions de contrôle aux microprocesseurs de ses moyens de contrôle local.

7. Un système conformément à la revendication 1, **caractérisé en ce que** chacun des utilisateurs d'une pluralité d'utilisateurs a accès, à travers au moins un de ces dispositifs informatiques utilisateur (D1, D2, D3), à condition que l'authentification effectuée par le serveur intermédiaire (S), à au moins une partie des informations enregistrées dans cette base de données (B) et/ou reçues par le serveur intermédiaire (S) du microprocesseur d'un appareil de cuisson (A1, A2) relié à cet utilisateur, comporte un signal confirmant la réception d'une instruction de contrôle.

8. Un système conformément à la revendication 4 **caractérisé en ce que** ces instructions de contrôle comportent des informations d'identification de l'appareil (A1, A2) devant être contrôlé et/ou de l'utilisateur qui est en train d'utiliser le dispositif informatique utilisateur (D1, D2, D3).

9. Une méthode pour le traitement et la préparation d'aliments par la cuisson comportant:
- le contrôle d'un appareil de cuisson (A1) pour le traitement et la préparation d'aliments par la cuisson, basé sur des instructions de contrôle contenant au moins certains paramètres de cuisson, acheminés aux moyens de contrôle local de l'appareil (A1), à travers un réseau de communications, à partir de moyens de contrôle télécommandé comportant un dispositif informatique utilisateur indépendant (D1) séparé de cet appareil; et
- le traitement et la transmission de ces instructions de contrôle, à travers un serveur intermédiaire (S), depuis ces moyens de contrôle télécommandé à ce microprocesseur des moyens de contrôle local, ou vice versa,
la méthode étant **caractérisée en ce qu'**elle comporte le contrôle d'une pluralité d'appareils de cuisson (A1, A2) par un ou plusieurs utilisateurs, depuis un ou plusieurs dispositifs informatiques utilisateur (D1, D2, D3) à travers la supervision et le contrôle de l'acheminement asynchrone ou synchrone d'instructions de contrôle, depuis des moyens de contrôle télécommandé respectifs, aux moyens de contrôle local de l'appareil concerné (A1, A2), au moyen de ce serveur intermédiaire (S) du réseau de communications et en utilisant une base de données (3) comprise et/ou accessible par ce serveur intermédiaire (S) comportant des données concernant cette pluralité d'appareils de cuisson (A1, A2) indiquant leur état actuel et leur histoire opérationnelle et à une pluralité d'utilisateurs, comportant au moins leurs informations d'identification respectives et la liaison entre utilisateurs et groupes d'appareils de cuisson (A1, A2).

10. Une méthode conformément à la revendication 9, **caractérisée en ce qu'**elle comporte, cet acheminement par le serveur intermédiaire (S) des instructions de contrôle aux moyens de contrôle local de l'appareil concerné (A1, A2) conditionné au résultat d'au moins un recoupement des informations d'identification de l'utilisateur du dispositif informatique utilisateur (D1) et de l'appareil qu'il ou qu'elle souhaite contrôler, effectué par le serveur intermédiaire (S).

11. Une méthode conformément à une quelconque des revendications 9 à 10, **caractérisée en ce que** ce serveur intermédiaire (S) acquiert, soit activement soit passivement, au moins les informations d'identification et d'état de ce ou ces appareils (A1, A2) à travers les moyens de communication des moyens de contrôle local et au moins les informations d'identification de l'utilisateur à travers les moyens de communication du ou des dispositifs informatiques utilisateur (D1, D2, D3).

12. Une méthode conformément à la revendication 9, **caractérisée en ce que** ce serveur intermédiaire (S) transmet en plus des informations multimédia qui seront affichées dans ce dispositif informatique utilisateur D1, sur son interface utilisateur, basées sur des données opérationnelles acquises par l'utilisateur d'appareil (A1).

13. Une méthode conformément à la revendication 9, **caractérisée en ce qu'**elle comporte l'acheminement, par le serveur intermédiaire (S) d'un signal confirmant la réception d'une instruction de contrôle au dispositif informatique utilisateur (D1, D2, D3) depuis lequel un utilisateur a demandé le contrôle d'un appareil de cuisson (A1, A2).

14. Une méthode conformément aux revendications 9, **caractérisée en ce qu'**elle comporte la transmission cryptée de ces instructions de contrôle.

15. Un programme informatique comportant des instructions codées qui, lorsqu'elles sont introduites dans un ordinateur, mettent en oeuvre la méthode conformément à la revendication 10.
